# EUROPÄISCHE PATENTSCHRIFT

(11) **EP 4 110 628 B1**
(45) Veröffentlichungstag und Bekanntmachung des Hinweises auf die Patenterteilung: **20.12.2023**
(21) Anmeldenummer: 21703204.4
(22) Anmeldetag: 02.02.2021
(51) Int. Cl.: B60G 7/00

(54) **MEHRPUNKTLENKER**
MULTI-POINT LINK
BRAS DE SUSPENSION À POINTS MULTIPLE

(30) Priorität: 24.02.2020 DE 102020202319
(43) Veröffentlichungstag der Anmeldung: 04.01.2023
(73) Patentinhaber: ZF Friedrichshafen AG, 88046 Friedrichshafen (DE)
(72) Erfinder: SCHEPER, Frank, 49624 Loeningen (DE); KÜPKER, Timo, 27239 Twistringen (DE); EILERS, Bernhard, 26897 Bredenberg (DE); KNOPP, Sören, 49179 Ostercappeln (DE); HELM, Eike, 49356 Diepholz (DE); LANGHORST, Friedhelm, 49356 Diepholz (DE); HÜGING, Johannes, 49082 Osnabrück (DE)
(74) Vertreter: ZF Friedrichshafen AG
(86) Internationale Anmeldenummer: PCT/EP2021/052350
(87) Internationale Veröffentlichungsnummer: WO 2021/170348

(56) Entgegenhaltungen:
- EP-A1- 1 679 206
- CN-U- 205 130 834
- DE-A1-102008 015 799
- DE-A1-102010 013 518
- DE-C1- 3 921 468
- DE-U- 1 702 240
- Fahrenwaldt Hans J ET AL: "Praxiswissen Schweißtechnik", Springer Fachmedien Wiesbaden GmbH, 1. Januar 2013 (2013-01-01), Seiten 320-324, XP055780107, Wiesbaden ISBN: 978-3-8348-0382-5 Gefunden im Internet: URL:- [gefunden am 2021-02-26]

## Beschreibung

Die Erfindung betrifft einen Mehrpunktlenker gemäß dem Oberbegriff von Patentanspruch 1.

Achsaufhängungen von Nutzfahrzeugen, beispielsweise Nutzfahrzeuge zum gewerblichen Güter- oder Personentransport, weisen häufig Starrachsen auf, die durch Mehrpunktlenker geführt sind. Derartige Starrachsen können durch einen Dreipunktlenker geführt sein, der - bei Betrachtung des Nutzfahrzeugs in einer Seitenansicht - oberhalb der Starrachse in einer oberen Lenkerebene angeordnet ist. In einer unteren Lenkerebene können solche Starrachsen auf jeder Fahrzeugseite durch jeweils eine sich in einer Fahrzeuglängsrichtung erstreckende Achsstrebe geführt sein. Bei derartigen Achsstreben handelt es sich um Zweipunktlenker mit zwei endseitigen Lagerbereichen, die durch einen geraden Verbindungsabschnitt miteinander verbunden sind. Zweipunktlenker mit endseitigen Lagerbereichen, die durch einen geraden Verbindungsabschnitt miteinander verbunden sind, kommen nicht nur zur Führung von Nutzfahrzeug-Starrachsen, sondern auch an anderen Einbauorten in Fahrwerken für Kraftfahrzeuge zum Einsatz.

Aus der DE 10 2010 013 518 A1 ist ein Zweipunktlenker entsprechend dem Oberbegriff des Anspruchs 1 für ein Fahrwerk eines Fahrzeugs bekannt, der dort als Verbindungsstrebe bezeichnet wird. Der Zweipunktlenker weist an jedem seiner Enden jeweils einen Gelenkbereich mit einer hohlzylindrischen Gelenkaufnahme für ein Gummilager auf, wobei die Gummilager als ein Zylinderlager ausgebildet sind. Die beiden hohlzylindrischen Gelenkaufnahmen sind über einen geraden Verbindungsabschnitt miteinander verbunden, der aus zwei parallel zueinander beabstandeten Trägerelementen gebildet ist. Die beiden Trägerelemente sind an ihren Enden mit den beiden hohlzylindrischen Gelenkaufnahmen verschweißt und ansonsten voneinander entkoppelt. Weiterhin weisen die beiden Trägerelemente, bei denen es sich um gerade Profilabschnitte handelt, über deren Längserstreckung einen konstanten Querschnitt auf, der jeweils als ein offener Profilquerschnitt in Form eines Kreisringsegments ausgebildet ist. Die Außenkanten der beiden Trägerelemente sind voneinander weg gerichtet. Bezüglich ihrer Längsachse weisen die beiden Trägerelemente eine geringe Torsionssteifigkeit und eine hohe Biegesteifigkeit auf.

Ein weiterer als Vierpunktlenker ausgeführter Mehrpunktlenker ist aus der EP 1 679 206 A1 und ein weiterer als Zweipunktlenker ausgeführter Mehrpunktlenker ist aus der CN 205130834 U bekannt.

Aufgabe der Erfindung ist es, eine alternative Bauform eines Mehrpunktlenkers bereitzustellen.

Diese Aufgabe wird gemäß der vorliegenden Erfindung gelöst durch einen Mehrpunktlenker mit den Merkmalen des unabhängigen Anspruchs 1.

Bevorzugte Ausführungsformen und Weiterbildungen sind Gegenstand der Unteransprüche. Weitere Merkmale und Details der Erfindung ergeben sich aus der Beschreibung und aus den Zeichnungsfiguren.

Die Erfindung sieht demnach einen Mehrpunktlenker für ein Fahrwerk eines Kraftfahrzeugs vor, der zumindest ein Paar von geradlinig ausgebildeten Profilabschnitten aufweist, die über ihre Längserstreckung parallel zueinander beabstandet und zugleich zwischen ihren Enden voneinander entkoppelt sind. Bei Betrachtung im Querschnitt weisen die Profilabschnitte jeweils einen offenen, zumindest im Wesentlichen C-förmig oder U-förmig ausgebildeten, Profilquerschnitt auf. Jedes Ende der Profilabschnitte ist über eine Schweißverbindung an eine hohlzylindrische Gelenkaufnahme angebunden. Die Enden der Profilabschnitte treffen dabei mit zylindermantelförmigen Außenumfangsflächen der hohlzylindrischen Gelenkaufnahmen zumindest im Wesentlichen T-förmig aufeinander.

Erfindungsgemäß sind die Schweißverbindungen zwischen den Profilabschnitten und den hohlzylindrischen Gelenkaufnahmen jeweils als eine Kehlnaht mit einem keilförmigen Nahtquerschnitt ausgebildet. Die Kehlnaht ist lediglich an den voneinander abgewandten Außenseiten des zumindest einen Paares von Profilabschnitten ausgeführt, so dass die einander zugewandten Innenseiten dieser Profilabschnitte schweißnahtfrei sind.

Versuche der Anmelderin haben zu dem unerwarteten Ergebnis geführt, dass durch die lediglich an den Außenseiten der Profilabschnitte ausgebildeten Kehlnahte in etwa gleichgroße, auf den Mehrpunktlenker einwirkende, Kräfte und Momente übertragen werden können wie bei einer Ausführung, bei der zusätzliche Kehlnähte an den Innenseiten der Profilabschnitte ausgebildet sind. Weitere Versuche der Anmelderin haben gezeigt, dass dieser Effekt nicht zu erzielen ist, wenn die Kehlnähte lediglich an den Innenseiten der Profilabschnitte ausgebildet sind. Auch bei Verwendung eines umfänglich geschlossenen Rohrprofils als Verbindung zwischen zwei hohlzylindrischen Gelenkaufnahmen ist dieser Effekt nicht zu erzielen, weil die Beabstandung des zumindest einen Paares von geradlinig ausgebildeten Profilabschnitten von besonderer Bedeutung ist.

Dadurch, dass die einander zugewandten Innenseiten der parallel zueinander beabstandeten Profilabschnitte schweißnahtfrei sind, kann der Herstellungsaufwand für den Mehrpunktlenker reduziert werden. Darüber hinaus ergeben sich hierdurch erweiterte gestalterische Möglichkeiten, wie beispielsweise eine relativ geringfügige, parallele Beabstandung der beiden Profilabschnitte zueinander, die bei einer Ausbildung von Kehlnähten an den Innenseiten der Profilabschnitte nicht zu realisieren wäre. Dies liegt darin begründet, dass die beiden parallel beabstandeten Profilabschnitte bei einer Ausbildung von Kehlnähten an den Innenseiten der Profilabschnitte einen Mindestabstand zueinander aufweisen müssten, um eine Zugänglichkeit zum Schweißen der Kehlnähte an den Innenseiten zu schaffen. Selbst bei Schaffung einer solchen Zugänglichkeit, beispielsweise für einen Schweißkopf, ist es nur bei einer relativ großen, parallelen Beabstandung der beiden Profilabschnitte zueinander möglich, die Kehlnaht an den Innenseiten unterbrechungsfrei, also ohne ein Absetzen des Schweißkopfes, auszuführen. In der Regel wird ein die Fertigungszeit erhöhendes Schweißen von zwei Seiten erforderlich sein. Dagegen können die lediglich an den Außenseiten der Profilabschnitte ausgebildeten Kehlnähte problemlos ohne ein zwischenzeitliches Absetzen geschweißt werden, wodurch sich die Fertigungszeit verringert.

Bei einer Kehlnahtverbindung stehen die zusammenzuschweißenden Bauteile zumindest im Wesentlichen in einem rechten Winkel zueinander. Die Schweißnaht hat dabei im Querschnitt im Wesentlichen die Form eines Dreiecks mit einer leichten Kehle an der freiliegenden Außenseite. Das T-förmige Aufeinandertreffen der Enden der Profilabschnitte mit den zylindermantelförmigen Außenumfangsflächen der hohlzylindrischen Gelenkaufnahmen wird in der Schweißtechnik auch als T-Stoß bezeichnet. Die Kehlnaht kann beispielsweise durch Metall-Aktivgas-Schweißen (MAG), Metall-Inertgas-Schweißen (MIG) oder Elektrodenschweißen hergestellt sein.

Insbesondere ist das zumindest eine Paar von geradlinig ausgebildeten Profilabschnitten an seinen beiden Enden über jeweils eine hohlzylindrische Gelenkaufnahme miteinander verbunden. Insbesondere handelt es sich bei den Profilabschnitten um separate Profilabschnitte, die im Ausgangszustand, also vor dem Verschwei-ßen mit den hohlzylindrischen Gelenkaufnahmen, als separate Einzelteile vorliegen. Insbesondere sind die beiden Profilabschnitte des zumindest einen Paars von geradlinig ausgebildeten Profilabschnitten exakt gleich lang oder zumindest im Wesentlichen gleich lang. Unter einem offenen Profilquerschnitt ist im Zusammenhang mit der vorliegenden Erfindung ein Profilabschnitt zu verstehen, der, bei Betrachtung im Querschnitt, einen von einer geraden Linie abweichenden, nicht ringförmig geschlossenen Verlauf aufweist. Zugleich ist unter einem offenen Profilabschnitt ein Profilabschnitt zu verstehen, der, bei Betrachtung im Querschnitt, eine konvexe Seite und eine konkave Seite aufweist, wobei die Öffnung des offenen Profilabschnitts auf der konkaven Seite liegt. Die konkave Seite wird auch als offene Profilseite bezeichnet.

Insbesondere sind die Profilabschnitte, bei Betrachtung im Querschnitt, nach Art eines Kreisringsegments geformt. Insbesondere sind die Profilabschnitte, bei Betrachtung im Querschnitt, symmetrisch ausgebildet. Insbesondere sind die Profilabschnitte des zumindest einen Paares von Profilabschnitten in Bezug auf eine durch Gelenkachsen der hohlzylindrischen Gelenkaufnahmen aufgespannte Ebene symmetrisch ausgebildet. Insbesondere sind die beiden Profilabschnitte über ihre Längserstreckung in einem unbelasteten Zustand gerade ausgebildet, so dass sie in Richtung ihrer Längsachse keine Krümmung aufweisen. Insbesondere sind die Profilabschnitte säulenförmig ausgebildet, also entsprechend einer Säule mit einer zumindest im Wesentlichen C-förmig oder U-förmig ausgebildeten Grundfläche, die sich gleichbleibend senkrecht zu dieser Grundfläche erstreckt.

Insbesondere weisen die hohlzylindrischen Gelenkaufnahmen einen umfänglich geschlossenen Querschnitt auf. Insbesondere sind die hohlzylindrischen Gelenkaufnahmen im Wesentlichen hohlzylindrisch ausgebildet. Insbesondere weisen die hohlzylindrischen Gelenkaufnahmen, zum Beispiel durch umlaufende Innennuten für Sicherungsringe und/oder umlaufende Anschlagflächen für Stützringe von Innenteilen von Gummi-Metall-Gelenken, geringfügige geometrische Abweichungen von einer idealen holzylindrischen Form auf. Vorliegend sollen auch Gelenkaufnahmen mit derartigen geringfügigen geometrischen Abweichungen von einer idealen holzylindrischen Form als hohlzylindrische Gelenkaufnahmen betrachtet werden. Vorzugsweise sind die hohlzylindrischen Gelenkaufnahmen zur Aufnahme von Innenteilen von Gummi-Metall-Gelenken, insbesondere von Innenteilen von Molekulargelenken, geeignet. Molekulargelenke werden bevorzugt in Fahrwerken von Kraftfahrzeugen eingesetzt, weil sie wartungsfrei und unempfindlich gegenüber Schmutz, Salzwasser und Steinschlag sind.

Vorteilhaft erstreckt sich die Kehlnaht in einen Spalt zwischen einer Stirnseite des Profilabschnitts und der zylindermantelförmigen Außenumfangsfläche der zugeordneten hohlzylindrischen Gelenkaufnahme hinein. Dabei ist die Kerbspannung an der Wurzelspitze - also dem Punkt der Kehlnaht, der am weitesten in den Spalt hineinragt - umso kleiner je weiter sich die Kehlnaht in den Spalt hinein erstreckt. Dies liegt darin begründet, dass bei einer Zugbelastung oder bei einer Druckbelastung des Mehrpunktlenkers an der Wurzelspitze ein zweiachsiger Spannungszustand vorliegt. Bei diesem zweiachsigen Spannungszustand kompensieren sich Zugspannungen und Druckspannungen, die im Bereich der Wurzelspitze zumindest im Wesentlichen senkrecht zueinander wirken, zumindest teilweise. Die Zugspannungen und Druckspannungen, die im Bereich der Wurzelspitze zumindest im Wesentlichen senkrecht zueinander wirken, treten dabei einerseits in den Enden der Profilabschnitte und andererseits in den jeweils zugeordneten zylindermantelförmigen Au-ßenumfangsflächen der hohlzylindrischen Gelenkaufnahmen auf. Insbesondere ist der Verlauf der Stirnseite des Profilabschnitts an den Verlauf der zylindermantelförmigen Außenumfangsfläche angepasst, so dass der Spalt über seine gesamte Längserstreckung zumindest im Wesentlichen geometrisch gleichbleibend ausgebildet ist.

Bevorzugt erstreckt sich die Kehlnaht von der Außenseite des Profilabschnitts bis zur Innenseite des Profilabschnitts und füllt somit den Spalt zwischen der Stirnseite des Profilabschnitts und der zylindermantelförmigen Außenumfangsfläche der zugeordneten hohlzylindrischen Gelenkaufnahme vollständig aus. Diese Ausprägung der Kehlnaht stellt ein Optimum im Hinblick auf eine Minimierung der unter Belastung des Mehrpunktlenkers an der Wurzelspitze auftretenden Kerbspannung dar. Die sich bis zur Innenseite des Profilabschnitts erstreckende Kehlnaht ist insbesondere als eine sogenannte HV-Naht ausgebildet. Bei einer HV-Naht (halbe V-Naht) ist nur ein Fügepartner, insbesondere das Ende des Profilabschnitts, angeschrägt und der andere Fügepartner, insbesondere die zylindermantelförmige Außenumfangsfläche der zugeordneten hohlzylindrischen Gelenkaufnahme, gerade.

Zweckmäßig weist die Stirnseite des Profilabschnitts eine Fase auf, die derart ausgeführt ist, dass sich der Spalt zwischen der Stirnseite des Profilabschnitts und der zylindermantelförmigen Außenumfangsfläche der hohlzylindrischen Gelenkaufnahme von der Außenseite des Profilabschnitts zu der Innenseite des Profilabschnitts hin keilförmig verjüngt. Auf diese Weise ist das Schweißen der HV-Naht an den voneinander abgewandten Außenseiten des zumindest einen Paares von Profilabschnitten problemlos möglich.

Insbesondere weisen die offenen Profilseiten des zumindest einen Paares von Profilabschnitten zumindest im Wesentlichen in die gleiche Richtung wie Gelenkachsen der hohlzylindrischen Gelenkaufnahmen. Insbesondere sind die Gelenkachsen der hohlzylindrischen Gelenkaufnahmen deckungsgleich mit Rotationsachsen der hohlzylindrischen Gelenkaufnahmen. Insbesondere sind die Gelenkachsen in einem unbelasteten Zustand des Mehrpunktlenkers parallel zueinander ausgerichtet. In einem Einbauzustand in einem Kraftfahrzeug sind die Gelenkachsen häufig parallel zu einer Fahrbahn ausgerichtet; beispielsweise, wenn der Mehrpunktlenker als eine Achsstrebe zur Führung einer Starrachse ausgebildet ist. Bei einer solchen Einbausituation es vorteilhaft, dass die offenen Profilseiten der beiden Profilabschnitte in Richtung der Gelenkachsen weisen, weil schöpfende Geometriebereiche vermieden werden, in denen sich in unerwünschter Weise beispielsweise Feuchtigkeit, Schmutz oder korrosiv wirkendende Medien ansammeln können.

Eine Anordnung der Profilabschnitte mit in Richtung der Gelenkachsen der hohlzylindrischen Gelenkaufnahmen weisenden, offenen Profilseiten wirkt darüber hinaus selbstzentrierend. Dies wirkt sich positiv auf den erforderlichen Aufwand zum Ausrichten der Profilabschnitte relativ zu den hohlzylindrischen Gelenkaufnahmen vor dem Schweißen der Kehlnaht, insbesondere der HV-Naht, aus. Die Enden der Profilabschnitte sitzen mit ihren Stirnseiten auf den jeweils zugeordneten zylindermantelförmigen Außenumfangsflächen der hohlzylindrischen Gelenkaufnahmen quasi wie ein Reiter in einem Sattel. Insbesondere sind die Stirnseiten der Profilabschnitte in Bezug auf eine durch die Gelenkachsen der hohlzylindrischen Gelenkaufnahmen aufgespannte Ebene symmetrisch ausgebildet. Die beschriebene, selbstzentrierende Anordnung ist auch vorteilhaft, weil die Stirnseiten der Profilabschnitte bei einer Druckbelastung des Mehrpunktlenkers allein schon aufgrund ihrer geometrischen Form nicht von den zylindermantelförmigen Außenumfangsflächen der hohlzylindrischen Gelenkaufnahmen abgedrängt werden können. Bei Beaufschlagung des Mehrpunktlenkers mit einer Druckkraft liegen in den Kehlnähten aufgrund der beschriebenen "Reiter-in-Sattel-Anordnung" symmetrische Belastungsverhältnisse vor. Wären die offenen Profilseiten des zumindest einen Paares von Profilabschnitten senkrecht zu den Gelenkachsen der hohlzylindrischen Gelenkaufnahmen ausgerichtet, wäre dies nicht der Fall. Insbesondere sind die Stirnseiten der Profilabschnitte konkav ausgebildet. Insbesondere sind die Stirnseiten der Profilabschnitte, bei Betrachtung in Richtung der Gelenkachsen, kreisbogenförmig ausgebildet.

Erfindungsgemäß sind die offenen Profilseiten des zumindest einen Paares von Profilabschnitten einander zugewandt ausgerichtet. Hierdurch ergeben sich unter Belastung des Mehrpunktlenkers günstige Verhältnisse, weil das zumindest eine Paar von Profilabschnitten insgesamt quasi wie ein zweifach längsgeschlitztes Rohr mit - bei Betrachtung im Querschnitt - gegenüberliegenden Längsschlitzen ausgebildet ist. Dem entsprechend sind die jeweils einseitig ausgebildeten Kehlnähte zwischen den Enden der Profilabschnitte und den zugeordneten hohlzylindrischen Gelenkaufnahmen - ebenfalls bei Betrachtung im Querschnitt - jeweils an erhabenen Außenseiten der Profilabschnitte ausgeführt. Insbesondere sind Längs-Außenkanten der beiden Profilabschnitte, deren offene Profilseiten einander zugewandt sind, ebenfalls einander zugewandt und dabei insbesondere gegenüberliegend angeordnet. Insbesondere weist ein Schlitz zwischen den beiden Profilabschnitten, deren offene Profilseiten einander zugewandt sind, eine Breite auf, die im Wesentlichen der Blechstärke der Profilabschnitte entspricht. So kann der Schlitz bei einer Blechstärke der Profilabschnitte von 6,5 Millimeter beispielsweise 10 Millimeter breit sein.

Vorteilhaft sind die Außendurchmesser der hohlzylindrischen Gelenkaufnahmen grö-βer als ein kleinstmöglicher Hüllkreis, der - bei Betrachtung im Querschnitt - um das zumindest eine Paar von Profilabschnitten gelegt ist. Mit einem Hüllkreis ist in diesem Zusammenhang der kleinstmögliche umschreibende Kreis gemeint. Damit zur Verbindung der Profilabschnitte mit den hohlzylindrischen Gelenkaufnahmen jeweils lediglich eine Kehlnaht an den voneinander abgewandten Außenseiten des zumindest einen Paares von Profilabschnitten ausreichend ist, müssen die Enden der Profilabschnitte zumindest im Wesentlichen senkrecht auf den zylindermantelförmigen Au-ßenumfangsflächen der hohlzylindrischen Gelenkaufnahmen stehen. Wäre der kleinstmögliche Hüllkreis um das zumindest eine Paar von Profilabschnitten beispielsweise genauso groß wie der Außendurchmesser der hohlzylindrischen Gelenkaufnahmen, würden äußere Bereiche der Stirnseiten der Profilabschnitte in etwa tangential auf die zylindermantelförmigen Außenumfangsflächen der hohlzylindrischen Gelenkaufnahmen treffen. Bei einer derartigen Konstellation kann der beschriebene Effekt, wonach durch die lediglich an den Außenseiten der Profilabschnitte ausgebildeten Kehlnahte in etwa gleichgroße Kräfte und Momente übertragen werden können wie bei einer Ausführung mit zusätzlichen Kehlnähten an den Innenseiten der Profilabschnitte, nicht erreicht werden.

Weiterhin vorteilhaft entsprechen im Bereich der Kehlnähte die Wandstärken der hohlzylindrischen Gelenkaufnahmen im Wesentlichen den Blechstärken der Profilabschnitte, also dem Abstand zwischen den Außenseiten und den jeweils zugeordneten Innenseiten der Profilabschnitte. Die zuvor beschriebene, zumindest teilweise Kompensation von Zugspannungen und Druckspannungen im Bereich der Wurzelspitze der Kehlnaht kann sich nur einstellen, wenn dort die Nachgiebigkeit der beiden Fügepartner im Wesentlichen gleich groß ist. Wären die hohlzylindrischen Gelenkaufnahmen beispielsweise nicht hohl sondern massiv, könnte sich die angesprochene, zumindest teilweise Kompensation von Zugspannungen und Druckspannungen im Bereich der Wurzelspitze der Kehlnaht nicht einstellen. Insbesondere unterscheiden sich die Wandstärken der hohlzylindrische Gelenkaufnahmen und die Blechstärken der Profilabschnitte um weniger als 50%, vorzugsweise um weniger als 40% und besonders bevorzugt um weniger als 30%.

Bevorzugt erstrecken sich Gelenkachsen der hohlzylindrischen Gelenkaufnahmen zumindest im Wesentlichen senkrecht zu den Längsseiten der Profilabschnitte. "Im Wesentlichen" ist hierbei relativ weit auszulegen, so dass auch noch Gelenkachsen, die sich in einem Winkel von bis zu +/- 45 Grad zu den Längsachsen der paarweise angeordneten Profilabschnitten erstrecken, wie dies zum Beispiel bei Dreipunktlenkern der Fall sein kann, hierunter fallen.

Gemäß einer ersten Alternative ist der Mehrpunktlenker als ein Zweipunktlenker, insbesondere als eine Achsstrebe zur Führung einer Starrachse, ausgebildet.

Gemäß einer zweiten Alternative ist der Mehrpunktlenker als ein Dreipunktlenker, insbesondere zur Führung einer Starrachse, ausgebildet.

Bevorzugt sind in den hohlzylindrischen Gelenkaufnahmen, zumindest teilweise, Innenteile von Gummi-Metall-Gelenken aufgenommen. Diese Innenteile bilden zusammen mit den sie aufnehmenden hohlzylindrischen Gelenkaufnahmen Gummi-Metall-Gelenke. Innenteile von Gummi-Metall-Gelenken weisen ein Kugelstück auf, das quasi als eine Achse des Gummi-Metall-Gelenks wirkt. Ein ringförmiger Zwischenraum zwischen dem Kugelstück und der hohlzylindrischen Gelenkaufnahme ist durch einen umlaufenden Elastomerkörper aufgefüllt. Der Elastomerkörper ist in dem Zwischenraum unter Vorspannung festgelegt. Der Elastomerkörper kann die Form eines Hohlzylinders aufweisen, wodurch das Gummi-Metall-Gelenk zu einem sogenannten Zylindergelenk wird. Insbesondere ist der Elastomerkörper durch zwei Stützringe in Erstreckungsrichtung der Gelenkachsen eingefasst. Im Einbauzustand lässt sich das Kugelstück unter Krafteinwirkung relativ zu der jeweiligen hohlzylindrischen Gelenkaufnahme bewegen, wobei das Material des Elastomerkörpers Rückstellungseigenschaften aufweist, die nach Fortfall der Krafteinwirkung eine Rückkehr des Kugelstücks in seine nicht ausgelenkte Nulllage bewirken. Der Elastomerkörper bewirkt, eingebaut in einem Kraftfahrzeug, in einem Fahrbetrieb durch elastische Verformung einen Ausgleich axialer und/oder radialer und/oder torsionaler und/oder kardanischer Verschwenkungen des Kugelstücks relativ zu der jeweiligen aufnehmenden hohlzylindrischen Gelenkaufnahme. Auf diese Weise kann über Mehrpunktlenker, die mit Gummi-Metall-Gelenken versehen sind, beispielsweise eine Starrachse, gelenkig an einen Fahrzeugrahmen angebunden sein.

Zweckmäßig weisen die Innenteile der Gummi-Metall-Gelenke zur Ermöglichung kardanischer Bewegungen einen kugelförmigen Gelenkbereich auf. Derartige Innenteile mit einem kugelförmigen Gelenkbereich bilden zusammen mit den sie aufnehmenden hohlzylindrischen Gelenkaufnahmen Gummi-Metall-Gelenke, die auch als Molekulargelenke bezeichnet werden. Um den kugelförmigen Gelenkbereich auszubilden, weist das Kugelstück einen kugelförmigen Bereich auf, der von dem Elastomerkörper ringförmig umschließend eingefasst ist. Kardanische Verschwenkungen erfolgen zumindest im Wesentlichen um den kugelförmigen Bereich des Kugelstücks.

Im Folgenden wird die Erfindung anhand lediglich Ausführungsbeispiele darstellender Zeichnungen näher erläutert, wobei sich gleiche Bezugszeichen auf gleiche, ähnliche oder funktional gleiche Bauteile oder Elemente beziehen. Dabei zeigt:
- Fig. 1: in einer Draufsicht eine Achsaufhängung gemäß dem Stand der Technik;
- Fig. 2: in einer Draufsicht einen Mehrpunktlenker gemäß einer ersten Ausführungsform der Erfindung;
- Fig. 3: in einer Schnittdarstellung den Mehrpunktlenker aus Figur 2 gemäß dem dort angegebenen Schnittverlauf A - A;
- Fig. 4: in einer Schnittdarstellung den Mehrpunktlenker aus Figur 3 gemäß dem dort angegebenen Schnittverlauf B - B;
- Fig. 5: in einer Draufsicht (mit Detailansicht) den Mehrpunktlenker aus Figur 2 unter Zugbelastung;
- Fig. 6: in einer Draufsicht (mit Detailansicht) den Mehrpunktlenker aus Figur 2 unter Druckbelastung und
- Fig. 7: in einer Draufsicht einen Mehrpunktlenker gemäß einer zweiten Ausführungsform der Erfindung.

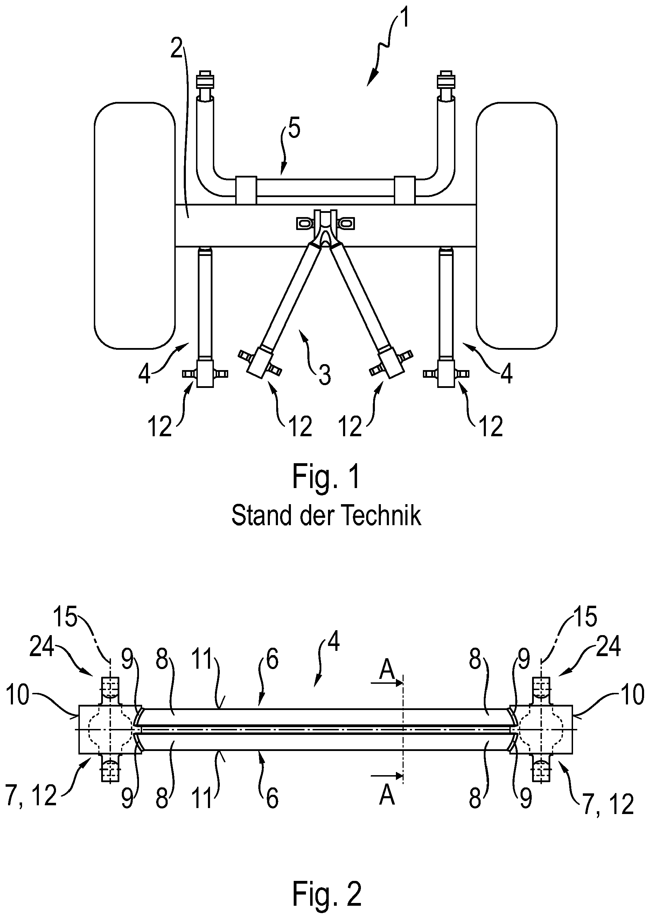

Fig. 1 zeigt eine Achsaufhängung 1 einer zweirädrigen Starrachse für ein Fahrwerk eines Kraftfahrzeugs. Die Starrachse weist einen sich in einer Fahrzeugquerrichtung erstreckenden Starrachskörper 2 auf, an den ein Mehrpunktlenker angebunden ist, wobei der Mehrpunktlenker als ein Dreipunktlenker 3 ausgebildet ist. Der Dreipunktlenker 3 weist zwei Lenkerarme auf, die zueinander einen spitzen Winkel einschlie-ßen und die sich in einem Zentralgelenk treffen. Über das Zentralgelenk ist der Dreipunktlenker 3 gelenkig an den Starrachskörper 2 angebunden. Freie Enden der beiden Lenkerarme sind jeweils über ein Gummi-Metall-Gelenk 12 an einen nicht dargestellten Fahrzeugrahmen anbindbar. Seitlich beabstandet zu dem Dreipunktlenker 3 und in einer von der Höhenlage des Dreipunktlenkers 3 abweichenden, sich im Wesentlichen parallel zu der Zeichenebene erstreckenden, unteren Höhenlage sind zwei als Achsstreben 4 ausgebildete Mehrpunktlenker mit jeweils einem Ende an den Starrachskörper 2 angebunden. Bei den Achsstreben handelt es sich um Zweipunktlenker 4, die sich in einer senkrecht zu der Fahrzeugquerrichtung weisenden Fahrzeuglängsrichtung erstrecken und daher auch als Längslenker bezeichnet werden. Die Zweipunktlenker 4 weisen an jedem ihrer Enden ein Molekulargelenk 12 auf. Die Achsaufhängung 1 weist ferner einen Wankstabilisator 5 auf, der schwenkbeweglich an den Starrachskörper 2 angebunden ist.

Ein in Fig. 2 dargestellter Mehrpunktlenker ist als ein Zweipunktlenker 4 ausgebildet, der auch als Achsstrebe bezeichnet wird und für ein Fahrwerk eines Kraftfahrzeugs geeignet ist. Der Zweipunktlenker 4 weist genau ein Paar von geradlinig ausgebildeten Profilabschnitten 6 auf. Die beiden Profilabschnitte 6 sind über ihre Längserstreckung jeweils parallel zueinander beabstandet und zugleich zwischen ihren Enden 8 voneinander entkoppelt. Bei Betrachtung im Querschnitt weisen die Profilabschnitte 6 jeweils einen offenen, C-förmig ausgebildeten, Profilquerschnitt auf. Jedes Ende 8 der Profilabschnitte 6 ist über eine MIG-geschweißte Kehlnaht 9 mit einem keilförmigen Nahtquerschnitt an eine hohlzylindrische Gelenkaufnahme 7 angebunden. Die Enden 8 der Profilabschnitte 6 treffen dabei mit zylindermantelförmigen Außenumfangsflächen 10 der hohlzylindrischen Gelenkaufnahmen 7 T-förmig aufeinander. Die Kehlnaht 9 ist lediglich an den voneinander abgewandten Außenseiten 11 der beiden Profilabschnitte 6 ausgeführt.

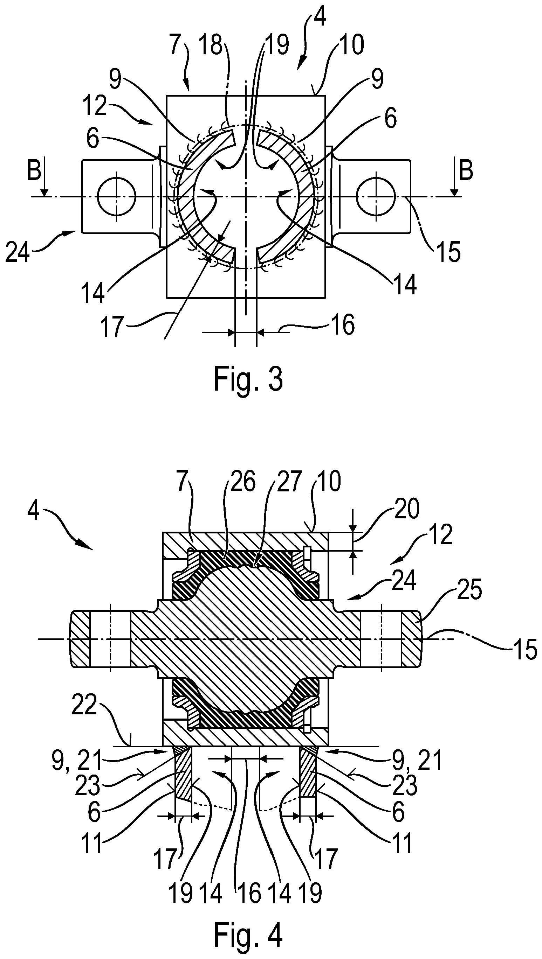

Wie aus Fig. 3 hervorgeht, weisen offene Profilseiten 14 der beiden Profilabschnitte 6 in die gleiche Richtung wie Gelenkachsen 15 der hohlzylindrischen Gelenkaufnahmen 7. Die offenen Profilseiten 14 sind, bei Betrachtung der Profilabschnitte 6 im Querschnitt, konkav ausgebildet. Darüber hinaus sind die offenen Profilseiten 14 der beiden Profilabschnitte 6 einander zugewandt ausgerichtet. Längs-Außenkanten der beiden Profilabschnitte 6 sind ebenfalls einander zugewandt und zugleich gegenüberliegend angeordnet. Die beiden Profilabschnitte 6 sind, bei Betrachtung im Querschnitt, symmetrisch zueinander angeordnet. Ein Schlitz 16 zwischen den beiden Profilabschnitten 6 weist eine Breite von 10 Millimeter auf. Die Profilabschnitte 6 weisen eine Blechstärke 17 von 6,5 Millimeter auf. Der Außendurchmesser der hohlzylindrischen Gelenkaufnahme 7 ist größer als ein kleinstmöglicher Hüllkreis 18, derbei Betrachtung im Querschnitt - um die beiden Profilabschnitte 6 gelegt ist. Die Kehlnaht 9 ist lediglich an den voneinander abgewandten, erhabenen Außenseiten 11 der beiden Profilabschnitte 6 ausgeführt, so dass die einander zugewandten Innenseiten 19 der beiden Profilabschnitte 6 schweißnahtfrei sind.

In Fig. 4 ist zu erkennen, dass die Gelenkachse 15 der hohlzylindrischen Gelenkaufnahme 7 deckungsgleich ist mit der Rotationsachse der hohlzylindrischen Gelenkaufnahme 7. Die Wandstärke 20 der hohlzylindrischen Gelenkaufnahme 7 entspricht im Wesentlichen den Blechstärken 17 der Profilabschnitte 6, also dem Abstand zwischen den Außenseiten 11 und den jeweils zugeordneten Innenseiten 19 der Profilabschnitte 6. Die Wandstärke 20 der hohlzylindrischen Gelenkaufnahme 7 beträgt 8 Millimeter und die Blechstärken 17 der Profilabschnitte 6 betragen, wie bereits ausgeführt, 6,5 Millimeter. Demzufolge ist die Wandstärkte 20 der hohlzylindrischen Gelenkaufnahme 7 ungefähr 19% geringer als die Blechstärken 17 der Profilabschnitte 6. Die Gelenkachse 15 der hohlzylindrischen Gelenkaufnahme 7 erstreckt sich senkrecht zu den Längsseiten der Profilabschnitte 6.

Die Kehlnähte 9 erstrecken sich in Spalten 21 zwischen Stirnseiten 22 der Profilabschnitte 6 und der zylindermantelförmigen Außenumfangsfläche 10 der hohlzylindrischen Gelenkaufnahme 7 hinein und füllen die Spalten 21 vollständig aus. Somit erstrecken sich die Kehlnähte 9, die hier als HV-Nähte ausgebildet sind, in ihrer Quererstreckung in Richtung der Gelenkachse 15 jeweils von den Außenseiten 11 der Profilabschnitte 6 bis zu den Innenseiten 19 der Profilabschnitte. Die Stirnseiten 22 der Profilabschnitte 6 sind in ihrem Verlauf an den Konturverlauf der zylindermantelförmigen Außenumfangsfläche 10 angepasst, so dass die Spalten 21 über ihre gesamte, dem Außenumfang der hohlzylindrischen Gelenkaufnahme 7 folgende, Längserstreckung zumindest im Wesentlichen geometrisch gleichbleibend ausgebildet sind. Die Stirnseiten 22 der Profilabschnitte 6 weisen jeweils eine Fase 23 auf, die derart ausgeführt ist, dass sich die Spalten 21 in ihrer Quererstreckung zwischen den Stirnseiten 22 der Profilabschnitte 6 und der zylindermantelförmigen Außenumfangsfläche 10 der hohlzylindrischen Gelenkaufnahme 7 von den Außenseiten 11 der Profilabschnitte 6 zu den Innenseiten 19 der Profilabschnitte 6 hin jeweils keilförmig verjüngen.

In der hohlzylindrischen Gelenkaufnahme 7 ist ein Innenteil 24 eines Gummi-Metall-Gelenks 12 aufgenommen. Dieses Innenteil 24 bildet zusammen mit der sie aufnehmenden hohlzylindrischen Gelenkaufnahme 7 ein Gummi-Metall-Gelenk 12. Das Innenteil 24 weist ein Kugelstück 25 auf, das quasi als eine Achse des Gummi-Metall-Gelenks 12 wirkt. Ein ringförmiger Zwischenraum zwischen dem Kugelstück 25 und der Innenwandung der hohlzylindrischen Gelenkaufnahme 7 ist mit einem umlaufenden Elastomerkörper 26 ausgefüllt, wobei der Elastomerkörper 26 in dem Zwischenraum unter Vorspannung festgelegt ist. Das Kugelstück 25 weist mittig einen kugelförmigen Bereich auf, der von dem Elastomerkörper 26 ringförmig umschließend eingefasst ist. Dadurch ist das Gummi-Metall-Gelenk ist als ein Molekulargelenk 12 mit einem kugelförmigen Gelenkbereich 27 ausgebildet. Kardanische Verschwenkungen des Molekulargelenks 12 erfolgen zumindest im Wesentlichen um diesen kugelförmigen Gelenkbereich 27. In Erstreckungsrichtung der Gelenkachse 15 ist der Elastomerkörper 26 durch zwei Stützringe eingefasst. Die hohlzylindrischen Gelenkaufnahme 7 weist eine umlaufende Innennut für einen Sicherungsring und eine umlaufende Anschlagfläche für einen Stützring, und somit geringfügige geometrische Abweichungen von einer idealen holzylindrischen Form, auf.

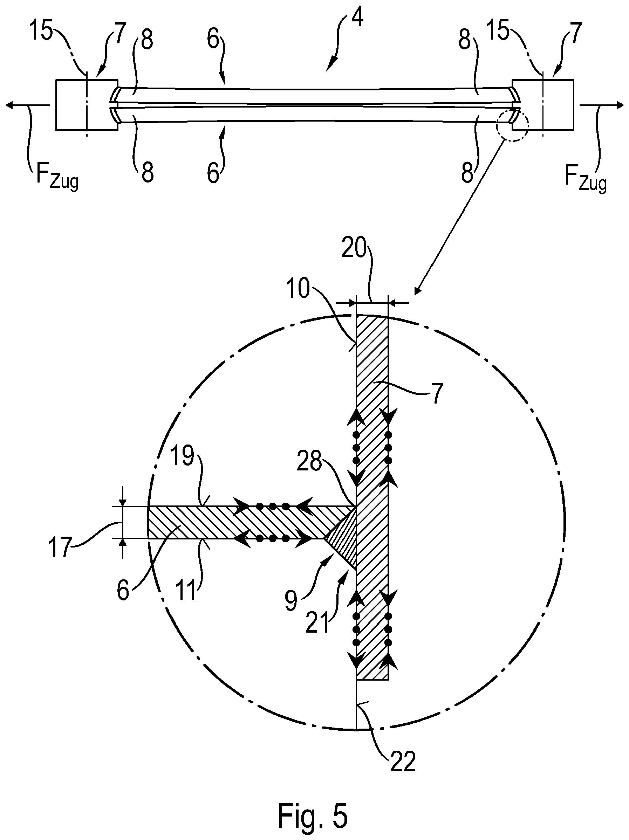

Fig. 5 veranschaulicht, warum durch die lediglich an den voneinander abgewandten Außenseiten 11 des einen Paares von Profilabschnitten 6 ausgebildete Kehlnaht 9 in etwa gleichgroße, auf den Zweipunktlenker 4 einwirkende, Zugkräfte F_{Zug} übertragen werden können wie bei einer Ausführung, bei der an den Innenseiten 19 des einen Paares von Profilabschnitten 6 jeweils eine zusätzliche Kehlnaht ausgebildet ist. Die bei Belastung des Zweipunktlenkers 4 mit der Zugkraft F_{Zug} im Bereich der Kehlnaht 9, die lediglich an der Außenseite 11 des Profilabschnitts 6 ausgebildet ist, auftretenden Spannungen sind symbolisch eingetragen. Dabei bedeuten zwei voneinander weg weisende Pfeile, zwischen denen drei Punkte eingezeichnet sind, Zugspannungen und zwei zueinander hin weisende Pfeile, zwischen denen drei Punkte eingezeichnet sind, Druckspannungen. Im Bereich der Wurzelspitze 28 - also dem Punkt der Kehlnaht 9, der am weitesten in den Spalt 21 zwischen der Stirnseite 22 des Profilabschnitts 6 und der zylindermantelförmigen Außenumfangsfläche 10 der hohlzylindrischen Gelenkaufnahme 7 hineinragt - treffen Zugspannungen und Druckspannungen rechtwinklig aufeinander. Durch das Aufeinandertreffen von Zugspannungen und Druckspannungen liegt im Bereich der Wurzelspitze 28 ein zweiachsiger Spannungszustand vor, bei dem sich die aufeinandertreffenden Zugspannungen und Druckspannungen teilweise in ihrer Wirkung kompensieren, was zu einer Verringerung der Kerbspannung im Bereich der Wurzelspitze 28 führt. Die Kerbspannung an der Wurzelspitze 28 ist dabei umso kleiner je weiter sich die Kehlnaht 9 in den Spalt 21 hinein erstreckt.

Der bereits zuvor beschriebene Effekt, wonach durch die lediglich an den Außenseiten 11 der Profilabschnitte 6 ausgebildeten Kehlnahte 9 in etwa gleichgroße Kräfte und Momente übertragen werden können wie bei einer Ausführung mit zusätzlichen Kehlnähten an den Innenseiten 19 der Profilabschnitte 6, wird auch dadurch bewirkt, dass sich die geradlinig ausgebildeten Profilabschnitte 6, die im belastungsfreien Zustand des Zweipunktlenkers 4 über ihre Längserstreckung parallel zueinander beabstandet und zugleich zwischen ihren Enden 8 voneinander entkoppelt sind, bei Belastung des Zweipunktlenkers 4 mit der Zugkraft F_{Zug} im Bereich ihrer Längsmitten annähern. Diese Annäherung ist hier übertrieben dargestellt, um das Verhalten der Profilabschnitte 6 unter Zugbelastung sichtbar zu machen. Die Breite des Schlitzes 16 ist so ausgelegt, dass sich die Profilabschnitte 6 auch bei Belastung des Zweipunktlenkers 4 der maximal zulässigen Zugkraft F_{Zug} nicht berühren. Um den beschriebenen Effekt erzielen zu können, ist es ebenfalls erforderlich, dass die Wandstärken 20 der hohlzylindrischen Gelenkaufnahmen 7 zumindest im Wesentlichen den Blechstärken 17 der Profilabschnitte 6 entsprechen.

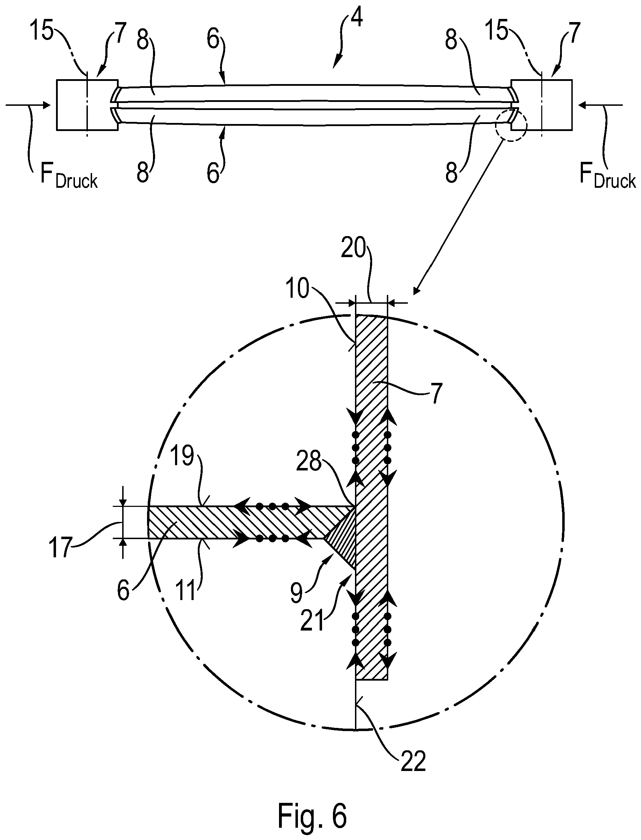

Durch Fig. 6 wird veranschaulicht, warum durch die lediglich an den voneinander abgewandten Außenseiten 11 des einen Paares von Profilabschnitten 6 ausgebildete Kehlnaht 9 in etwa gleichgroße, auf den Zweipunktlenker 4 einwirkende, Druckkräfte F_{Druck} übertragen werden können wie bei einer Ausführung, bei der an den Innenseiten 19 des einen Paares von Profilabschnitten 6 jeweils eine zusätzliche Kehlnaht ausgebildet ist. Die bei Belastung des Zweipunktlenkers 4 mit der Druckkraft F_{Druck} im Bereich der Kehlnaht 9, die lediglich an der Außenseite 11 des Profilabschnitts 6 ausgebildet ist, auftretenden Spannungen sind symbolisch eingetragen. Dabei bedeuten wiederum zwei voneinander weg weisende Pfeile, zwischen denen drei Punkte eingezeichnet sind, Zugspannungen und zwei zueinander hin weisende Pfeile, zwischen denen drei Punkte eingezeichnet sind, Druckspannungen. Im Bereich der Wurzelspitze 28 treffen wiederum Zugspannungen und Druckspannungen rechtwinklig aufeinander, die sich in ihrer Wirkung ebenfalls teilweise kompensieren. Allerdings treffen die Zugspannungen und Druckspannungen hier in einer anderen Konstellation aufeinander als dies bei der zuvor beschriebenen Belastung des Zweipunktlenkers 4 mit der Zugkraft F_{Zug} der Fall ist.

Bei Belastung des Zweipunktlenkers 4 mit der Druckkraft F_{Druck} entfernen sich die geradlinig ausgebildeten Profilabschnitte 6, die im belastungsfreien Zustand des Zweipunktlenkers 4 über ihre Längserstreckung parallel zueinander beabstandet und zugleich zwischen ihren Enden 8 voneinander entkoppelt sind, im Bereich ihrer Längsmitten voneinander. Dieser Effekt ist hier übertrieben dargestellt, um das Verhalten der Profilabschnitte 6 unter Druckbelastung sichtbar zu machen. Um die teilweise Kompensation der Zugspannungen und der Druckspannungen im Bereich der Wurzelspitze 28 erzielen zu können, ist es auch hier erforderlich, dass die Wandstärken 20 der hohlzylindrischen Gelenkaufnahmen 7 im Wesentlichen den Blechstärken 17 der Profilabschnitte 6 entsprechen.

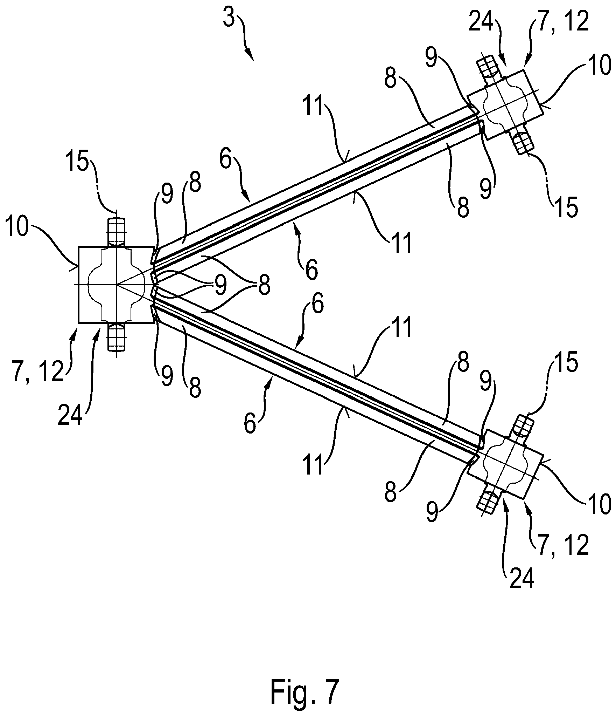

Fig. 7 zeigt einen Mehrpunktlenker 3 für ein Fahrwerk eines Kraftfahrzeugs, wobei der Mehrpunktlenker als ein Dreipunktlenker 3 zur Führung einer Starrachse ausgebildet ist. Der Dreipunktlenker 3 weist zwei Paare von geradlinig ausgebildeten Profilabschnitten 6 auf. Die beiden Paare von Profilabschnitten 6 sind über ihre Längserstreckung jeweils parallel zueinander beabstandet und zugleich zwischen ihren Enden 8 voneinander entkoppelt. Bei Betrachtung im Querschnitt weisen die Profilabschnitte 6 jeweils einen offenen, C-förmig ausgebildeten, Profilquerschnitt auf. Jedes Ende 8 der Profilabschnitte 6 ist über eine Schweißverbindung 9 an eine hohlzylindrische Gelenkaufnahme 7 angebunden. Die Enden 8 der Profilabschnitte 6 treffen dabei mit zylindermantelförmigen Außenumfangsflächen 10 der hohlzylindrischen Gelenkaufnahmen 7 teils exakt und teils im Wesentlichen T-förmig aufeinander. In den hohlzylindrischen Gelenkaufnahmen 7 ist jeweils ein Innenteil 24 eines Gummi-Metall-Gelenks 12 aufgenommen. Diese Innenteile 24 bilden zusammen mit den sie aufnehmenden hohlzylindrischen Gelenkaufnahmen 7 jeweils ein Gummi-Metall-Gelenk 12. Die Schweißverbindungen 9 zwischen den Profilabschnitten 6 und den hohlzylindrischen Gelenkaufnahmen 7 sind jeweils als eine Kehlnaht 9 mit einem keilförmigen Nahtquerschnitt ausgebildet. Die Kehlnaht 9 ist dabei jeweils lediglich an den voneinander abgewandten Außenseiten 11 der beiden Paare von Profilabschnitten 6 ausgeführt. Die beiden Paare von Profilabschnitten 6 laufen in einem spitzen Winkel aufeinander zu und treffen sich in einer der hohlzylindrischen Gelenkaufnahmen 7, die zusammen mit dem zugeordneten Innenteil 24 auch als Zentralgelenk bezeichnet wird. Insgesamt vier Enden 8 der beiden Paare von Profilabschnitten 6 sind mit der zylindermantelförmigen Außenumfangsfläche 10 dieser hohlzylindrischen Gelenkaufnahme 7 unter einem von 90 Grad abweichenden Winkel verschweißt.

### Bezugszeichen

- 1: Achsaufhängung
- 2: Starrachskörper
- 3: Mehrpunktlenker, Dreipunktlenker
- 4: Mehrpunktlenker, Zweipunktlenker, Achsstrebe
- 5: Wankstabilisator
- 6: Profilabschnitt
- 7: hohlzylindrische Gelenkaufnahme
- 8: Ende des Profilabschnitts
- 9: Schweißverbindung, Kehlnaht
- 10: zylindermantelförmige Außenumfangsfläche
- 11: Außenseite des Profilabschnitts
- 12: Gummi-Metall-Gelenk, Molekulargelenk
- 14: offene Profilseite
- 15: Gelenkachse der hohlzylindrischen Gelenkaufnahme
- 16: Schlitz
- 17: Blechstärke
- 18: Hüllkreis
- 19: Innenseite des Profilabschnitts
- 20: Wandstärke der hohlzylindrischen Gelenkaufnahme
- 21: Spalt
- 22: Stirnseite des Profilabschnitts
- 23: Fase
- 24: Innenteil des Gummi-Metall-Gelenks
- 25: Kugelstück
- 26: Elastomerkörper
- 27: kugelförmiger Gelenkbereich
- 28: Wurzelspitze

- F_{Zug}: Zugkraft
- F_{Druck}: Druckkraft

## Patentansprüche

1. Mehrpunktlenker (3, 4) für ein Fahrwerk eines Kraftfahrzeugs, der Mehrpunktlenker (3, 4) aufweisend zumindest ein Paar von geradlinig ausgebildeten Profilabschnitten (6), die über ihre Längserstreckung parallel zueinander beabstandet und zugleich zwischen ihren Enden (8) voneinander entkoppelt sind,
- wobei die Profilabschnitte (6), bei Betrachtung im Querschnitt, jeweils einen offenen, zumindest im Wesentlichen C-förmig oder U-förmig ausgebildeten, Profilquerschnitt aufweisen,
- wobei jedes Ende (8) der Profilabschnitte (6) über eine Schweißverbindung (9) an eine hohlzylindrische Gelenkaufnahme (7) angebunden ist und
- wobei die Enden (8) der Profilabschnitte (6) dabei mit zylindermantelförmigen Außenumfangsflächen (10) der hohlzylindrischen Gelenkaufnahmen (7) zumindest im Wesentlichen T-förmig aufeinandertreffen,
**dadurch gekennzeichnet, dass**
die Schweißverbindungen (9) zwischen den Profilabschnitten (6) und den hohlzylindrischen Gelenkaufnahmen (7) jeweils als eine Kehlnaht (9) mit einem keilförmigen Nahtquerschnitt ausgebildet sind, die lediglich an den voneinander abgewandten Au-ßenseiten (11) des zumindest einen Paares von Profilabschnitten (6) ausgeführt ist, so dass die einander zugewandten Innenseiten (19) dieser Profilabschnitte (6) schweißnahtfrei sind, wobei die offenen Profilseiten (14) des zumindest einen Paares von Profilabschnitten (6) einander zugewandt ausgerichtet sind, wobei die offenen Profilseiten (14) des zumindest einen Paares von Profilabschnitten (6) zumindest im Wesentlichen in die gleiche Richtung weisen wie Gelenkachsen (15) der hohlzylindrischen Gelenkaufnahmen (7).

2. Mehrpunktlenker (3, 4) nach Anspruch 1, **dadurch gekennzeichnet, dass** sich die Kehlnaht (9) in einen Spalt (21) zwischen einer Stirnseite (22) des Profilabschnitts (6) und der zylindermantelförmigen Außenumfangsfläche (10) der zugeordneten hohlzylindrischen Gelenkaufnahme (7) hinein erstreckt.

3. Mehrpunktlenker (3, 4) nach Anspruch 2, **dadurch gekennzeichnet, dass** sich die Kehlnaht (9) von der Außenseite (11) des Profilabschnitts (6) bis zur Innenseite (19) des Profilabschnitts (6) erstreckt und somit den Spalt (21) zwischen der Stirnseite (22) des Profilabschnitts (6) und der zylindermantelförmigen Außenumfangsfläche (10) der zugeordneten hohlzylindrischen Gelenkaufnahme (7) vollständig ausfüllt.

4. Mehrpunktlenker (3, 4) nach Anspruch 2 oder 3, **dadurch gekennzeichnet, dass** die Stirnseite (22) des Profilabschnitts (6) eine Fase (23) aufweist, die derart ausgeführt ist, dass sich der Spalt (21) zwischen der Stirnseite (22) des Profilabschnitts (6) und der zylindermantelförmigen Außenumfangsfläche (10) der hohlzylindrischen Gelenkaufnahme (7) von der Außenseite (11) des Profilabschnitts (6) zu der Innenseite (19) des Profilabschnitts (6) hin keilförmig verjüngt.

5. Mehrpunktlenker (3, 4) nach einem der vorhergehenden Ansprüche, **dadurch gekennzeichnet, dass** die Außendurchmesser der hohlzylindrischen Gelenkaufnahmen (7) größer sind als ein kleinstmöglicher Hüllkreis (18), der - bei Betrachtung im Querschnitt - um das zumindest eine Paar von Profilabschnitten (6) gelegt ist.

6. Mehrpunktlenker (3, 4) nach einem der vorhergehenden Ansprüche, **dadurch gekennzeichnet, dass** im Bereich der Kehlnähte (9) die Wandstärken der hohlzylindrischen Gelenkaufnahmen (7) im Wesentlichen den Blechstärken (17) der Profilabschnitte (6), also dem Abstand zwischen den Außenseiten (11) und den jeweils zugeordneten Innenseiten (19) der Profilabschnitte (6), entsprechen.

7. Mehrpunktlenker (3, 4) nach einem der vorhergehenden Ansprüche, **dadurch gekennzeichnet, dass** sich Gelenkachsen (15) der hohlzylindrischen Gelenkaufnahmen (7) zumindest im Wesentlichen senkrecht zu den Längsseiten der Profilabschnitte (6) erstrecken.

8. Mehrpunktlenker (4) nach einem der vorhergehenden Ansprüche, **dadurch gekennzeichnet, dass** der Mehrpunktlenker als ein Zweipunktlenker (4), insbesondere als eine Achsstrebe (4) zur Führung einer Starrachse, ausgebildet ist.

9. Mehrpunktlenker (3) nach einem der Ansprüche 1 bis 7, **dadurch gekennzeichnet, dass** der Mehrpunktlenker als ein Dreipunktlenker (3), insbesondere zur Führung einer Starrachse, ausgebildet ist.

10. Mehrpunktlenker (3, 4) nach einem der vorhergehenden Ansprüche, **dadurch gekennzeichnet, dass** in den hohlzylindrischen Gelenkaufnahmen (7), zumindest teilweise, Innenteile (24) von Gummi-Metall-Gelenken (12) aufgenommen sind.

11. Mehrpunktlenker (3, 4) nach Anspruch 10, **dadurch gekennzeichnet, dass** die Innenteile (24) der Gummi-Metall-Gelenke (12) zur Ermöglichung kardanischer Bewegungen einen kugelförmigen Gelenkbereich (27) aufweisen.

## Claims

1. Multi-point link (3, 4) for a chassis of a motor vehicle, the multi-point link (3, 4) comprising at least one pair of rectilinear profile portions (6) which are parallel to and spaced apart from one another over their longitudinal extent and are also decoupled from one another between their ends (8),
- wherein the profile portions (6), as viewed in cross-section, each have an open, at least substantially C-shaped or U-shaped profile cross-section,
- wherein each end (8) of the profile portions (6) is attached to a hollow-cylindrical joint receptacle (7) via a welded connection (9), and
- wherein the ends (8) of the profile portions (6), with outer peripheral faces (10), in the shape of a cylinder casing, of the hollow-cylindrical joint receptacles (7), meet one another at least substantially in a T-shape,
**characterized in that**
the welded connections (9) between the profile portions (6) and the hollow-cylindrical joint receptacles (7) are each in the form of a fillet weld (9) with a wedge-shaped seam cross section, which is formed only on the outer sides (11) facing away from one another of the at least one pair of profile portions (6), such that the mutually facing inner sides (19) of these profile portions (6) are free from weld seams, wherein the open profile sides (14) of the at least one pair of profile portions (6) face one another, wherein the open profile sides (14) of the at least one pair of profile portions (6) face at least substantially in the same direction as the joint axes (15) of the hollow-cylindrical joint receptacles (7).

2. Multi-point link (3, 4) according to Claim 1, **characterized in that** the fillet weld (9) extends into a gap (21) between an end face (22) of the profile portion (6) and the outer peripheral face (10), in the shape of a cylinder casing, of the associated hollow-cylindrical joint receptacle (7).

3. Multi-point link (3, 4) according to Claim 2, **characterized in that** the fillet weld (9) extends from the outer side (11) of the profile portion (6) to the inner side (19) of the profile portion (6) and hence completely fills the gap (21) between the end face (22) of the profile portion (6) and the outer peripheral face (10), in the shape of a cylinder casing, of the associated hollow-cylindrical joint receptacle (7).

4. Multi-point link (3, 4) according to Claim 2 or 3, **characterized in that** the end face (22) of the profile portion (6) has a chamfer (23) which is designed such that the gap (21) between the end face (22) of the profile portion (6) and the outer peripheral face (10), in the form of a cylinder casing, of the hollow-cylindrical joint receptacle (7) tapers in a wedge shape from the outer side (11) of the profile portion (6) towards the inner side (19) of the profile portion (6).

5. Multi-point link (3, 4) according to one of the preceding claims, **characterized in that** the outside diameters of the hollow-cylindrical joint receptacles (7) are greater than a smallest possible envelope circle (18) which, as viewed in cross section, is placed around the at least one pair of profile portions (6).

6. Multi-point link (3, 4) according to one of the preceding claims, **characterized in that** in the region of the fillet welds (9), the wall thicknesses of the hollow-cylindrical joint receptacles (7) correspond substantially to the sheet thicknesses (17) of the profile portions (6), i.e. to the distance between the outer sides (11) and the respective associated inner sides (19) of the profile portions (6).

7. Multi-point link (3, 4) according to one of the preceding claims, **characterized in that** joint axes (15) of the hollow-cylindrical joint receptacles (7) extend at least substantially perpendicularly in relation to the long sides of the profile portions (6).

8. Multi-point link (4) according to one of the preceding claims, **characterized in that** the multi-point link is in the form of a two-point link (4), in particular an axle strut (4) for guiding a rigid axle.

9. Multi-point link (3) according to one of Claims 1 to 7, **characterized in that** the multi-point link is in the form of a three-point link (3), in particular for guiding a rigid axle.

10. Multi-point link (3, 4) according to one of the preceding claims, **characterized in that** inner parts (24) of rubber-metal joints (12) are at least partially received in the hollow-cylindrical joint receptacles (7).

11. Multi-point link (3, 4) according to Claim 10, **characterized in that** the inner parts (24) of the rubber-metal joints (12) have a ball-shaped joint region (27) to allow universal movements.

## Revendications

1. Bras articulé multipoint (3, 4) pour un châssis d'un véhicule automobile, le bras articulé multipoint (3, 4) présentant au moins une paire de segments profilés (6) configurés sous forme rectiligne, qui sont espacés parallèlement l'un de l'autre sur leur étendue longitudinale et qui sont en même temps découplés l'un de l'autre entre leurs extrémités (8),
- les segments profilés (6), considérés dans la section transversale, présentant chacun une section transversale profilée ouverte, configurée au moins essentiellement en forme de C ou en forme de U,
- chaque extrémité (8) des segments profilés (6) étant reliée par l'intermédiaire d'une liaison soudée (9) à un logement d'articulation cylindrique creux (7) et
- les extrémités (8) des segments profilés (6) rencontrant alors au moins essentiellement en forme de T des surfaces périphériques extérieures (10) en forme d'enveloppe cylindrique des logements d'articulation cylindriques creux (7),
**caractérisé en ce que**
les liaisons soudées (9) entre les segments profilés (6) et les logements d'articulation cylindriques creux (7) sont configurées respectivement sous la forme d'une soudure d'angle (9) avec une section transversale de soudure en forme de coin, qui est réalisée uniquement sur les côtés extérieurs (11) détournés l'un de l'autre de l'au moins une paire de segments profilés (6), de telle sorte que les côté intérieurs (19) de ces segments profilés (6) qui se font face sont exempts de soudure, les côtés profilés ouverts (14) de l'au moins une paire de segments profilés (6) étant orientés en se faisant face, les côtés profilés ouverts (14) de l'au moins une paire de segments profilés (6) étant dirigés au moins essentiellement dans la même direction que les axes d'articulation (15) des logements d'articulation cylindriques creux (7).

2. Bras articulé multipoint (3, 4) selon la revendication 1, **caractérisé en ce que** la soudure d'angle (9) s'étend dans une fente (21) entre un côté frontal (22) du segment profilé (6) et la surface périphérique extérieure (10) en forme d'enveloppe cylindrique du logement d'articulation cylindrique creux (7) associé.

3. Bras articulé multipoint (3, 4) selon la revendication 2, **caractérisé en ce que** la soudure d'angle (9) s'étend du côté extérieur (11) du segment profilé (6) jusqu'au côté intérieur (19) du segment profilé (6) et remplit ainsi entièrement la fente (21) entre le côté frontal (22) du segment profilé (6) et la surface périphérique extérieure (10) en forme d'enveloppe cylindrique du logement d'articulation cylindrique creux (7) associé.

4. Bras articulé multipoint (3, 4) selon la revendication 2 ou 3, **caractérisé en ce que** le côté frontal (22) du segment profilé (6) présente un chanfrein (23) qui est réalisé de telle sorte que la fente (21) entre le côté frontal (22) du segment profilé (6) et la surface périphérique extérieure (10) en forme d'enveloppe cylindrique du logement d'articulation cylindrique creux (7) se rétrécit en forme de coin depuis le côté extérieur (11) du segment profilé (6) vers le côté intérieur (19) du segment profilé (6).

5. Bras articulé multipoint (3, 4) selon l'une quelconque des revendications précédentes, **caractérisé en ce que** les diamètres extérieurs des logements d'articulation cylindriques creux (7) sont plus grands qu'un cercle enveloppant le plus petit possible (18) qui - considéré dans la section transversale - est placé autour de l'au moins une paire de segments profilés (6).

6. Bras articulé multipoint (3, 4) selon l'une quelconque des revendications précédentes, **caractérisé en ce que**, dans la zone des soudures d'angle (9), les épaisseurs de paroi des logements d'articulation cylindriques creux (7) correspondent essentiellement aux épaisseurs de tôle (17) des segments profilés (6), c'est-à-dire à la distance entre les côtés extérieurs (11) et les côtés intérieurs (19) respectivement associés des segments profilés (6).

7. Bras articulé multipoint (3, 4) selon l'une quelconque des revendications précédentes, **caractérisé en ce que** les axes d'articulation (15) des logements d'articulation cylindriques creux (7) s'étendent au moins essentiellement perpendiculairement aux côtés longitudinaux des segments profilés (6).

8. Bras articulé multipoint (4) selon l'une quelconque des revendications précédentes, **caractérisé en ce que** le bras articulé multipoint est configuré sous la forme d'un bras articulé à deux points (4), notamment sous la forme d'une barre d'essieu (4) pour guider un essieu rigide.

9. Bras articulé multipoint (3) selon l'une quelconque des revendications 1 à 7, **caractérisé en ce que** le bras articulé multipoint est configuré sous la forme d'un bras articulé à trois points (3), notamment pour guider un essieu rigide.

10. Bras articulé multipoint (3, 4) selon l'une quelconque des revendications précédentes, **caractérisé en ce que** les logements d'articulation cylindriques creux (7) reçoivent, au moins en partie, des parties intérieures (24) d'articulations en caoutchouc-métal (12) .

11. Bras articulé multipoint (3, 4) selon la revendication 10, **caractérisé en ce que** les parties intérieures (24) des articulations en caoutchouc-métal (12) présentent une zone d'articulation (27) de forme sphérique pour permettre des mouvements de cardan.
